# EUROPEAN PATENT SPECIFICATION

(11) **EP 3 653 434 B1**
(45) Date of publication and mention of the grant of the patent: **22.12.2021**
(21) Application number: 19206496.2
(22) Date of filing: 31.10.2019
(51) Int. Cl.: B60P 1/04, B62D 21/14, E02F 9/08, B60B 35/10, B62D 21/18, B62D 49/06, E02F 9/02, B60P 1/16

(54) **DUMPER WITH VARIABLE TRACK WIDTH**
KIPPER MIT VARIABLER SPURWEITE
TOMBEREAU À LARGEUR DE VOIE VARIABLE

(30) Priority: 16.11.2018 GB 201818702
(43) Date of publication of application: 20.05.2020
(73) Proprietor: Belle Engineering (Sheen) Limited, Buxton, Derbyshire SK17 OEU (GB)
(72) Inventor: HALL, Martin, Nr Buxton, Derbyshire SK17 0EU (GB); MADIN, Oliver, Nr Buxton, Derbyshire SK17 0EU (GB)
(74) Representative: Fountain, Sullivan

(56) References cited:
- EP-A1- 2 983 971
- EP-A2- 2 899 102
- AU-A1- 2013 201 562
- GB-A- 2 169 576

## Description

### TECHNICAL FIELD

The present disclosure relates to a dumper comprising a track width adjustment system that is operable to vary the track width of at least one axle of the dumper.

### BACKGROUND

Dumpers are vehicles including an integral skip that is designed for carrying bulk material, especially for use on construction sites and in earth moving applications. The skip is provided with a deployment system that is operable to raise and/or tip the skip relative to a main body of the dumper, for example to facilitate loading and unloading of the skip.

The track width selected when designing a dumper is generally limited for example by the need to facilitate access to difficult-to-reach locations which may require a dumper to pass through comparatively narrow gaps. However, low track width can lead to instability, especially when a dumper is operating on a steep gradient, on uneven or lose terrain, or with the skip in a raised and/or tipped position. GB2169576A describes a dumper with a telescoping front axle that may be extended and retracted in order to vary the track width of the dumper.

It is an aim of the present invention to provide a dumper that has increased stability across a range of operating conditions without sacrificing the ability of the dumper to access difficult-to-reach locations.

### SUMMARY OF THE INVENTION

According to an aspect of the present invention there is provided a dumper comprising a skip adapted for carrying a load, a deployment system that is operable to raise and/or tip the skip relative to a main body of the dumper, and a track width adjustment system that is operable to vary the track width of the dumper; wherein the dumper comprises a sensor configured to detect the deployment state of the skip, and an electronic control system that is configured to inhibit operation of the track width adjustment system in dependence on the detected deployment state of the skip.

It will be appreciated that a dumper is a vehicle that is designed to carry bulk material in a skip forming part of the vehicle, especially for use on construction sites and in earth moving applications. It will further be appreciated that the skip is a receptacle that is designed to carry bulk material, typically including a base and a plurality of sidewalls that extend upwardly from the base.

The variable track width adjustment system allows the track width of the dumper to be adjusted in use such that the dumper is capable of being selectively operated in a narrow or retracted configuration, for example to enable the dumper to pass through comparatively narrow gaps; and in a wide or extended configuration, for example to increase the stability of the dumper when operating on a steep gradient, on uneven or lose terrain, or with the skip in a raised and/or tipped position. However, by configuring the dumper to inhibit operation of the track width adjustment system in dependence on the deployment state of the skip, the dumper of the present invention is able to prevent the track width of the dumper from being adjusted in situations in which adjusting the track width of the dumper might cause the dumper to tip over, for example when the skip is in a raised and/or tipped position or while the skip is moving relative to the main body of the dumper.

The dumper is preferably self-propelling in use under the action of its own drive system. The drive system may include any suitable drive means, including, for example, a combustion engine and/or one or more electric or hydraulic motors arranged in any suitable manner.

The present invention may be applied to many different types of dumpers having various different configurations. For example, the invention may be applied to rigid body dumpers and/or to articulated dumpers. In addition, the invention may be applied to dumpers including an operator station comprising one or more control devices (and optionally a seat) from which an operator is able to control operation of the dumper and/or to dumpers that are controlled remotely or that are self-driving.

The present invention may also be applied to dumpers of various different sizes. However, in a preferred embodiment the dumper may be a compact dumper, for example a dumper having a track width of no more than 2m and preferably no more than 1.5m (the track width being measured while the track width adjustment system is in a retracted state). The present invention is particularly applicable to compact dumpers due to their comparatively low stability, although similar advantages may also be achieved when the invention is applied to larger dumpers.

The skip may be pivotally connected to the main body of the dumper in order to enable tipping of the skip. Alternatively, or in addition, the skip may be connected to the main body of the dumper by a lifting mechanism in order to enable lifting of the skip. The deployment system may be driven by any suitable actuation system, including, for example, a hydraulic actuation system and/or an actuation system including one or more electric motors.

The dumper may be a wheeled dumper including at least first and second wheels. Alternatively, or in addition, the dumper may be a tracked dumper including at least first and second tracks. The track width adjustment system may be configured to vary the track width of the dumper by causing relative movement between the first and second wheels and/or between the first and second tracks. The first and second wheels or tracks may be movably mounted to the main body of the dumper in any suitable manner, including, for example, on extendable chassis members that are slidingly movable with respect to the main body of the dumper. The track width adjustment system may be driven by any suitable actuation system, including, for example, a hydraulic actuation system and/or an actuation system including one or more electric motors.

The dumper may be configured to inhibit operation of the track width adjustment system by preventing the track width adjustment system from being operated to reduce the track width of the dumper in dependence on the deployment state of the skip. The dumper may additionally be configured to prevent the track width adjustment system from increasing the track width of the dumper in dependence on the deployment state of the skip.

The dumper may be configured to inhibit operation of the track width adjustment system when the skip is beyond a threshold position, and to permit operation of the track width adjustment system when the skip is below the threshold position. The threshold position may comprise a tipping threshold such that operation of the track width adjustment system is inhibited when the skip has been tipped beyond a certain angle relative to the main body of the dumper. Alternatively, or in addition, the threshold position may comprise a height threshold such that operation of the track width adjustment system is inhibited when the skip has been raised above a certain height relative to the main body of the dumper.

The dumper may be configured to inhibit operation of the track width adjustment system unless the skip is in an at least substantially fully lowered position and/or in an at least substantially fully non-tipped position. However, in other embodiments the dumper may be configured to permit operation of the track width adjustment system while the skip is at least partially raised and/or at least partially tipped, for example while the skip remains below a height threshold and/or a tipping threshold.

The dumper may be configured to inhibit operation of the track width adjustment system while the skip is being moved relative to the main body of the dumper, and to permit operation of the track width adjustment system while the skip is not being moved relative to the main body of the dumper.

The dumper comprises a sensor configured to detect the deployment state of the skip (for example the position of the skip and/or whether or not the skip is being moved relative to the main body of the dumper), and an electronic control system that is configured to inhibit operation of the track width adjustment system in dependence on the detected deployment state of the skip.

The dumper may comprise a mechanical track width adjustment prevention system that is configured to inhibit operation of the track width adjustment system in dependence on the deployment state of the skip.

The dumper may comprise a common control element that is operable by a user to control both the deployment state of the skip and the track width of the dumper, wherein the control element is selectively operable in either a skip deployment mode for controlling the deployment state of the skip or a track width adjustment mode for controlling the track width of the dumper. In this way the parts count and complexity of the dumper may be reduced, and track width adjustment may be prevented while the skip is being moved relative to the main body of the dumper. The control element may, for example, be a lever. The mode selection may be controlled, for example, using a manual switch.

The dumper may comprise a common actuation system that is operable to control both the deployment state of the skip and the track width of the dumper, wherein the actuation system is selectively switchable between a skip deployment mode for controlling the deployment state of the skip and a track width adjustment mode for controlling the track width of the dumper. In this way the parts count and complexity of the dumper may be reduced, and track width adjustment may be prevented while the skip is being moved relative to the main body of the dumper. The common actuation system may be a hydraulic actuation system. The common actuation system may comprise a valve that is operable to selectively switch the common actuation system between the skip deployment mode and the track width adjustment mode. The valve may be a solenoid valve, and may be configured to default to a position corresponding to the skip deployment mode. Alternatively, the skip deployment system and the track width adjustment system may be powered by separate actuation systems, which may be entirely independent of each other.

The dumper may comprise first and second axles, each of which may be provided with at least first and second wheels or first and second tracks. The track width adjustment system may be configured to only vary the track width of the dumper at a first one of the first and second axles. In this way it may be possible to provide increased stability to the dumper while minimising the weight, complexity and cost of the dumper. The axle having a variable track width may be a front axle or alternatively a rear axle. The axle having a variable track width is preferably the axle that is located below the skip and/or at the same end of the dumper as the skip. In other embodiments the track width adjustment system may alternatively be configured to vary the track width of the dumper at multiple axles, for example at both a front axle and a rear axle, in order to provide maximised stability. It will be appreciated that the term "axle" as used throughout this specification refers to a pair of wheels (or tracks) provided on either side of the dumper. It will further be appreciated that in some cases the wheels (or tracks) of an axle may be mounted separately to each other, and that there is no requirement for wheels (or tracks) to be connected to a common shaft.

The dumper may comprise a notification system configured to confirm to an operator of the dumper whether track width adjustment is currently enabled or inhibited. The notification system may, for example, comprise a light which is configured to be switched on and off or to change colour in dependence on the availability of the track width adjustment function.

### BRIEF DESCRIPTION OF THE DRAWINGS

One or more embodiments of the invention will now be described, by way of example only, with reference to the accompanying drawings, in which:
Figures 1 to 4 illustrate a compact dumper in accordance with one possible embodiment of the present invention;
Figure 5 schematically illustrates an electronic control system of the dumper illustrated in Figures 1 to 4, and
Figure 6 schematically illustrates an alternative mechanical control system that may be used in place of the electronic control system illustrated in Figure 5 in accordance with another possible embodiment of the present invention.

### DETAILED DESCRIPTION

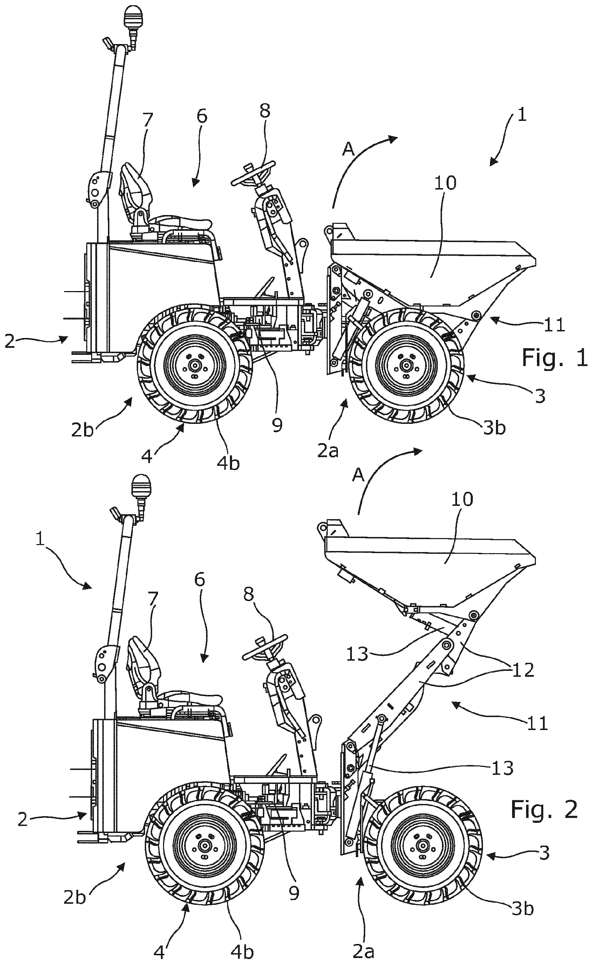

Figures 1 to 4 illustrate a compact dumper 1 in accordance with one possible embodiment of the present invention.

As illustrated in Figures 1 to 4, the dumper 1 comprises an articulated main body 2 formed by a front section 2a and a rear section 2b. The front section 2a is pivotally coupled to the rear section 2b by a hinge in order to enable the dumper 1 to be steered in use. The front section 2a is provided with a front axle 3 including first and second front wheels 3a, 3b, and the rear section 2b is provided with a rear axle 4 including first and second rear wheels 4a, 4b.

The rear section 2b of the dumper 1 comprises an operator station 6 including a seat 7 and controls 8 (including a steering wheel, accelerator and brake controls, as well as other control elements which are described in more detail below) by which the dumper 1 may be controlled in use. The rear section 2b further comprises a drive system 9, optionally including a combustion engine. The drive system 9 is connected to the rear axle 4 via a transmission (and optionally also to the front axle 3) and is operable to drive the wheels 3a, 3b, 4a, 4b of the dumper 1 such that the dumper 1 is self-propelling in use.

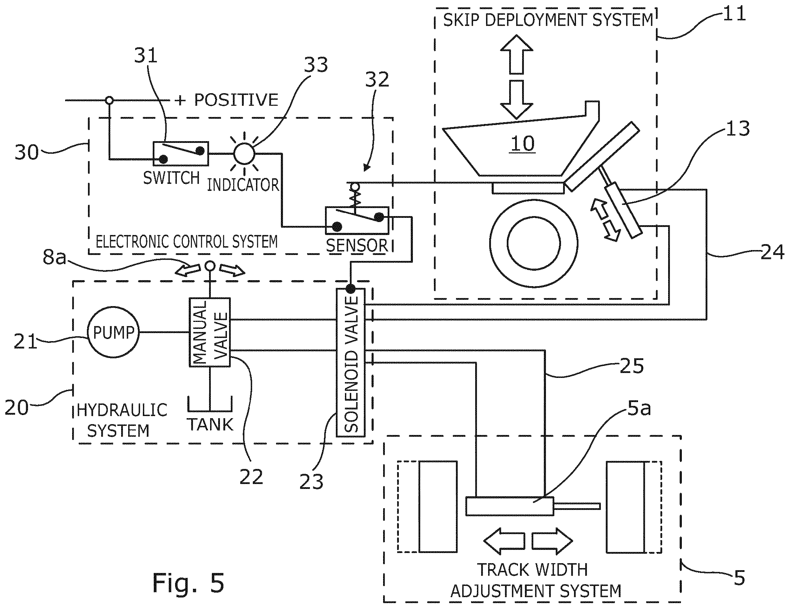

The front section 2a comprises a skip 10 that is located directly above the front axle 3 and configured for carrying bulk material. The skip 10 is connected to the main body 2 of the dumper 1 via a skip deployment system 11 comprising a plurality of rigid links 12 and hydraulic pistons 13. The skip deployment system 11 is operable to move the skip 10 relative to the main body 2 of the dumper 1 between a lowered position (illustrated in Figure 1) and a raised position (illustrated in Figure 2), and also to move the skip 10 between a non-tipped position (illustrated in Figures 1 and 2) and a tipped position (as indicated by arrow A in Figures 1 and 2) in a conventional manner. The skip deployment system 11 is powered by a hydraulic actuation system 20, as schematically illustrated in Figure 5, and is configured to be controlled by an operator using a lever 8a, as described in more detail below.

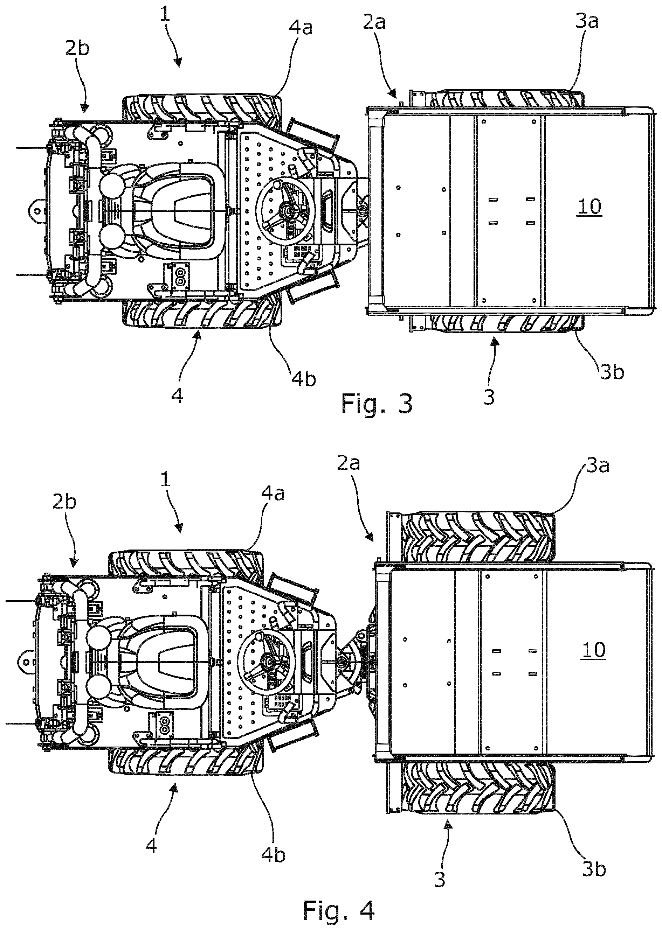

The front axle 3 is provided with a track width adjustment system 5 (illustrated schematically in Figure 5) that is operable to move the front wheels 3a, 3b with respect to the main body 2 of the dumper 1 in order to vary the track width of the dumper 1 at the front axle 3. In particular, the track width adjustment system 5 is operable to control movement of the front wheels 3a, 3b between a retracted configuration (illustrated in Figure 3) for enabling the dumper 1 to pass through comparatively narrow gaps, and an extended configuration (illustrated in Figure 4) for providing increased stability. The front wheels 3a, 3b may be movably mounted to the front section 2a of the dumper 1 by any suitable mounting system, including, for example, on extendible chassis members (not shown) that are mounted within and slidingly movable with respect to corresponding housings provided on the front section 2a of the dumper 1. As shown in Figure 4, the range of track width adjustment provided at each front wheel 3a, 3b is comparatively small, for example approximately 200mm, or less than the width of the wheel. In other embodiments the range of track width adjustment may be significantly greater such that the front wheels 3a, 3b can be extended a greater distance out from the front section 2a of the dumper 1. However, it has been found that a significant increase in stability can be achieved with even a modest increase in track width as illustrated in Figure 4.

The track width adjustment system 5 includes one or more hydraulic pistons 5a that are arranged to control extension and retraction of the front wheels 3a, 3b, as schematically illustrated in Figure 5. For simplicity only a single hydraulic piston 5a is illustrated in Figure 5. However, it will be appreciated that the track width adjustment system 5 may include any suitable number and arrangement of hydraulic pistons 5a. For example, one or more hydraulic pistons may be connected directly between the front wheels 3a, 3b in order to control the relative distance between the front wheels 3a, 3b; or alternatively each front wheel 3a, 3b may be provided with its own dedicated hydraulic piston(s) which may be connected between the wheel and the front section 2a of the main body 2 of the dumper 1. In other embodiments the hydraulic pistons may equally be replaced by one or more hydraulic motors, which may each be configured to operate a rack and pinion system. The track width adjustment system 5 is powered by the same hydraulic actuation system 20 that is used to power the skip deployment system 11, as schematically illustrated in Figure 5, and is also configured to be controlled by an operator using the same lever 8a, as described in more detail below.

Figure 5 schematically illustrates the hydraulic actuation system 20, the track width adjustment system 5, the skip deployment system 11, and an electronic control system 30 used in controlling operation of the track width adjustment system 5. As shown in Figure 5, the hydraulic actuation system 20 comprises a pump 21, a manual valve 22, and a solenoid valve 23.

The pump 21 may be driven by any suitable power source (for example by the main drive system 9, or alternatively by a separate electrical motor), and is configured to power movement of the skip deployment system 11 and the track width adjustment system 5. The manual valve 22 is configured to control the direction of movement of the skip deployment system 11 and the track width adjustment system 5 (for example skip up/down and tipped/non-tipped, and front wheels extended/retracted). The position of the manual valve 22 is controlled by the lever 8a. In particular, the lever 8a may be moved by an operator in a first direction in order place the manual valve 22 in a first configuration for raising and/or tipping the skip 10 or extending the front axle 3, or in an opposing second direction in order to place the manual valve 22 in a second configuration for lowering and/or un-tipping the skip 10 or retracting the front axle 3.

The solenoid valve 23 is connected to the hydraulic pistons 13 of the skip deployment system 11 by a first feeder line 24 and to the hydraulic piston(s) 5a of the track width adjustment system 5 by a second feeder line 25, and is configured to control which one of the skip deployment system 11 and the track width adjustment system 5 is powered by the hydraulic actuation system 20.

The solenoid valve 23 is configured to default to a first configuration in which the hydraulic actuation system 20 is connected to the skip deployment system 11 via the first feeder line 24 and disconnected from the track width adjustment system 5. When the solenoid valve 23 is in its first configuration the hydraulic actuation system 20 is placed in a skip deployment mode, in which the skip deployment system 11 will be powered when an operator inputs a command using the lever 8a. For example, the skip deployment system 11 may be powered to lift and/or tip the skip 10 if a user pushes the lever 8a forwards and to lower and/or un-tip the skip 10 if the user pulls the lever 8a back while the hydraulic actuation system 20 is in the skip deployment mode.

However, the solenoid valve 23 is configured to be selectively switched by the electronic control system 30 into a second configuration in which the hydraulic actuation system 20 is connected to the track width adjustment system 5 via the second feeder line 25 and disconnected from the skip deployment system 11. When the solenoid valve 23 is in its second configuration the hydraulic actuation system 20 is placed in a track width adjustment mode, in which the track width adjustment system 5 will be powered when an operator inputs a command using the lever 8a. For example, the track width adjustment system 5 may be powered to extend the front axle 3 by pushing the front wheels 3a, 3b outwardly if a user pushes the lever 8a forwards and to retract the front axle 3 by pulling the front wheels 3a, 3b inwardly if the user pulls the lever 8a back while the hydraulic actuation system 20 is in the track width adjustment mode.

The electronic control system 30 comprises a manually operated switch 31 that can be switched by an operator between an open position (or skip deployment position) for commanding activation of the skip deployment system 11 and a closed position (or track width adjustment position) for commanding activation of the track width adjustment system 5.

The electronic control system 30 further comprises a skip position sensor 32 including a second switch that is configured to automatically switch between an open position when the skip 10 is in an at least partially raised and/or tipped position (for example as illustrated in Figure 2) and a closed position when the skip 10 is at least substantially in its fully lowered and non-tipped position (as illustrated in Figure 1). The skip position sensor 32 may comprise an electronic sensor that is configured to output an electronic signal for controlling the state of the second switch in dependence on a sensed position of the skip 10, or alternatively may comprise a mechanical link that is configured to physically close the second switch when the skip 10 is at least substantially in its fully lowered and non-tipped position. The electronic control system 30 only forms a closed circuit when both the first and second switches are closed.

In this way, the electronic control system 30 is configured to switch the solenoid valve 23 from its first configuration into its second configuration (thereby enabling track width adjustment) only if the manual switch 31 has been moved by an operator to the track width adjustment position and the skip position sensor 32 has detected that the skip 10 is at least substantially in its fully lowered and non-tipped position. Operation of the track width adjustment system 5 to increase or decrease the track width of the front axle 3 is therefore prevented in situations in which the skip 10 is at least partially raised and/or at least partially tipped, at which times the dumper 1 may be susceptible to tipping over if the track width adjustment system 5 was operated.

In addition, since the skip deployment system 11 and the track width adjustment system 5 are both powered by the same actuation system 20 which can only be operably connected to one of the skip deployment system 11 and the track width adjustment system 5 at any one time, it is also not possible for the track width of the front axle 3 to be adjusted while the skip 10 is being moved relative to the main body 2 of the dumper 1.

As illustrated in Figure 5, the electronic control system 30 also includes an indicator light 33 that is automatically illuminated when the manual switch 31 has been placed in the track width adjustment position and the skip position sensor 32 has detected that the skip 10 is at least substantially in its fully lowered and non-tipped position. The indicator light 33 therefore provides an indication to the operator of when operation of the track width adjustment system 5 is enabled such that the track width adjustment system 5 (and not the skip deployment mechanism 11) will be operated in response to an operator input via the lever 8a.

It will be appreciated that the skip deployment system 11 includes at least one hydraulic piston 13 that is operable to raise the skip 10 and at least one piston 13 that is operable to tip the skip 10, as illustrated in Figure 2. However, for simplicity, only a single piston 13 of the skip deployment system 20 is illustrated in Figure 5. The hydraulic actuation system 20 may further comprise an additional valve downstream of the solenoid valve 23 for controlling whether the hydraulic actuation system 20 is connected to the piston(s) that are operable to raise the skip 10 or to the piston(s) that are operable to tip the skip 10.

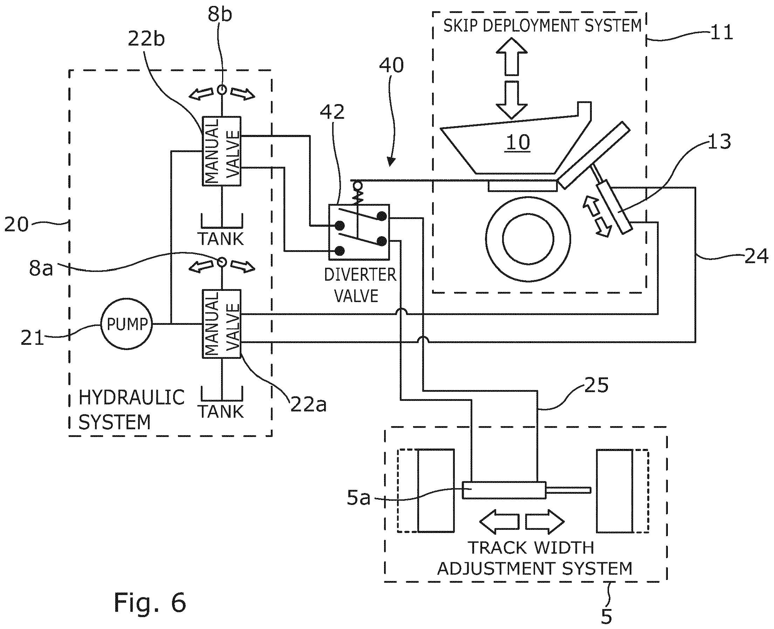

Figure 6 schematically illustrates an alternative mechanical track width adjustment prevention system 40 which may be used for inhibiting operation of the track width adjustment system 5 in place of the electronic control system 30 described above in accordance with another possible embodiment of the present invention. For simplicity the same reference numbers have been used in Figure 6 to identify elements having an equivalent function to elements that have already been described in connection with Figure 5.

As shown in Figure 6, in this alternative embodiment the hydraulic actuation system 20 includes first and second manual valves 22a, 22b which are each connected to a common pump 21. The first manual valve 22a is connected to the skip deployment system 11 via a first feeder line 24, and is configured to control the direction of movement of the skip deployment system 11 (for example skip up/down and tipped/non-tipped) in response to a user input via a first lever 8a. The second manual valve 22b is connected to the track width adjustment system 5 via a second feeder line 25, and is configured to control the direction of movement of the track width adjustment system 5 (for example front wheels extended/retracted) in response to a user input via a second lever 8b. In this way it is possible for an operator to control the deployment state of the skip 10 and the track width of the front axle 3 individually using separate control elements 8a, 8b.

However, the second feeder line 25, extending between the second manual valve 22b and the track width adjustment system 5, is additionally provided with a further valve 42 that is switchable between a closed state for preventing the flow of hydraulic fluid through the second feeder line 25 (thereby preventing the track width of the front axle 3 from being adjusted) and an open state for permitting the flow of hydraulic fluid through the second feeder line 25 (thereby enabling track width adjustment). The valve 42 is biased towards its closed state, and so will default to a position in which track width adjustment is prevented. However, the valve 42 is configured to be automatically switched into its closed position, in which track width adjustment is enabled, by a suitable mechanical link. In this way the valve 42 acts as a mechanical sensor for permitting track width adjustment while the skip 10 is at least substantially in its fully lowered and non-tipped position (as illustrated in Figure 1) and preventing track width adjustment when the skip 10 is in an at least partially raised and/or tipped position (for example as illustrated in Figure 2).

Two possible embodiments of the present invention have been described above. However, it will be appreciated that many modifications may be made to the above examples without departing from the scope of the present invention as defined in the accompanying claims.

For example, in each of the above-described embodiments track width adjustment is prevented unless the skip is at least substantially in its fully lowered and non-tipped position (as illustrated in Figure 1). However, in other embodiments track width adjustment may be permitted while the skip is at least partially raised and/or tipped as long as the skip remains below a threshold position, for example below a threshold height and/or below a threshold tipping angle. In this case the threshold position may be set at any suitable level. For example, the threshold position may be below 50% or below 25% of the maximum height extension and/or tipping angle of the skip relative to its fully lowered and non-tipped position. However, other positions are also possible.

Moreover, it will be appreciated that the above-described electronic control system 30 and mechanical track width adjustment prevention system 40 are described for illustrative purposes only, and that many other electronic and/or mechanical systems could equally be used to inhibit track width adjustment in dependence on the deployment state of the skip, for example while the skip is being moved relative to the main body of the dumper and/or while the skip is beyond a threshold position.

In the above-described embodiments the skip deployment system and the track width adjustment system are both powered by a common hydraulic actuation system. However, in other embodiments the skip deployment system and the track width adjustment system could equally be powered by separate actuation systems, which may include separate pumps and be entirely independent of each other. In addition, in other embodiments, one or both of the skip deployment system and the track width adjustment system may be powered by electric motors instead of by a traditional hydraulic actuation system. For example, in another embodiment the track width adjustment system may be powered by an electrical actuator, and the dumper may include a control system comprising a sensor for detecting the current position of the skip and a processor that is configured to inhibit a commanded track width adjustment operation in dependence on the detected deployment state of the skip, for example if it is determined that the skip is being moved relative to the main body of the dumper and/or if it is determined that the skip is beyond a threshold position.

In other embodiments the rear axle may also be configured to have a variable track width. However, it has been found that a significant increase in stability can be achieved by providing a track width adjustment system at a single axle only (preferably the axle that is located directly beneath the skip) without incurring the additional penalty in complexity, cost and weight associated with providing track width adjustment systems for each of the front and rear axles.

In other embodiments the skip deployment system may only be configured to tip and un-tip the skip without also being configured to raise and lower the skip.

## Claims

1. A dumper (1) comprising a skip (10) adapted for carrying a load, a deployment system (11) that is operable to raise and/or tip the skip (10) relative to a main body (2) of the dumper (1), and a track width adjustment system (5) that is operable to vary the track width of the dumper (1); wherein the dumper (1) comprises a sensor (32) configured to detect the deployment state of the skip (10), and an electronic control system (30) that is configured to inhibit operation of the track width adjustment system (5) in dependence on the detected deployment state of the skip (10).

2. A dumper (1) according to claim 1, wherein the dumper (1) is configured to inhibit operation of the track width adjustment system (5) by preventing the track width adjustment system (5) from being operated to reduce the track width of the dumper (1) and/or by preventing the track width adjustment system (5) from being operated to increase the track width of the dumper (1) in dependence on the deployment state of the skip (10).

3. A dumper (1) according to claim 1 or claim 2, wherein the dumper (1) is configured to inhibit operation of the track width adjustment system (5) when the skip (10) is beyond a threshold position, and to permit operation of the track width adjustment system (5) when the skip is below the threshold position.

4. A dumper (1) according to claim 3, wherein the dumper (1) is configured to inhibit operation of the track width adjustment system (5) unless the skip (10) is in an at least substantially fully lowered position and/or in an at least substantially fully non-tipped position.

5. A dumper (1) according to any preceding claim, wherein the dumper (1) is configured to inhibit operation of the track width adjustment system (5) while the skip (10) is being moved relative to the main body (2) of the dumper (1), and to permit operation of the track width adjustment system (5) while the skip (10) is not being moved relative to the main body (2) of the dumper (1).

6. A dumper (1) according to any preceding claim, wherein the dumper (1) comprises a mechanical track width adjustment prevention system (40) that is configured to inhibit operation of the track width adjustment system (5) in dependence on the deployment state of the skip (10).

7. A dumper (1) according to any preceding claim, wherein the dumper (1) comprises a common control element that is operable by a user to control both the deployment state of the skip (10) and the track width of the dumper (1), wherein the control element is selectively operable in either a skip deployment mode for controlling the deployment state of the skip (10) or a track width adjustment mode for controlling the track width of the dumper (1).

8. A dumper (1) according to any preceding claim, wherein the dumper (1) comprises a common actuation system (20) that is operable to control both the deployment state of the skip (10) and the track width of the dumper (1), wherein the actuation system (20) is selectively switchable between a skip deployment mode for controlling the deployment state of the skip (10) and a track width adjustment mode for controlling the track width of the dumper (1).

9. A dumper (1) according to claim 8, wherein the common actuation system (20) is a hydraulic actuation system.

10. A dumper (1) according to claim 9, wherein the common actuation system (20) comprises a valve (22) that is operable to selectively switch the common actuation system (20) between the skip deployment mode and the track width adjustment mode.

11. A dumper (1) according to any preceding claim, wherein the dumper (1) comprises first and second axles (3, 4), wherein the track width adjustment system (5) is configured to only vary the track width of the dumper (1) at a first one of the first and second axles (3, 4).

12. A dumper (1) according to any of claims 1 to 10, wherein the dumper (1) comprises first and second axles (3, 4), wherein the track width adjustment system (5) is configured to vary the track width of the dumper (1) at each of the first and second axles (3, 4).

13. A dumper (1) according to any preceding claim, wherein the dumper (1) comprises a notification system configured to confirm to an operator of the dumper (1) whether track width adjustment is currently enabled or inhibited.

14. A dumper (1) according to any preceding claim, wherein the dumper (1) is a compact dumper, for example a dumper (1) having a track width of no more than 2m and preferably no more than 1.5m.

15. A dumper (1) according to any preceding claim, wherein the dumper (1) is a wheeled dumper.

## Patentansprüche

1. Dumper (1), der Folgendes umfasst: eine Mulde (10), die zum Tragen einer Last angepasst ist, ein Auslösungssystem (11), das betriebsfähig ist, um die Mulde (10) relativ zu einem Hauptkörper (2) des Dumpers (1) anzuheben und/oder zu kippen, und ein Spurverstellungssystem (5), das betriebsfähig ist, um die Spurweite des Dumpers (1) zu variieren; wobei der Dumper (1) einen Sensor (32), der konfiguriert ist, um den Auslösungszustand der Mulde (10) zu erkennen, und ein elektronisches Steuersystem (30) umfasst, das konfiguriert ist, um einen Betrieb des Spurverstellungssystems (5) in Abhängigkeit von dem erkannten Auslösungszustand der Mulde (10) zu verhindern.

2. Dumper (1) nach Anspruch 1, wobei der Dumper (1) so konfiguriert ist, um den Betrieb des Spurverstellungssystems (5) durch Folgendes zu verhindern: Unterbinden, dass das Spurverstellungssystem (5) betrieben wird, um die Spurbreite des Dumpers (1) zu reduzieren und/oder Unterbinden, dass das Spurverstellungssystem (5) betrieben wird, um die Spurweite des Dumpers (1) in Abhängigkeit von dem Auslösungszustand der Mulde (10) zu vergrößern.

3. Dumper (1) nach Anspruch 1 oder 2, wobei der Dumper (1) konfiguriert ist, um den Betrieb des Spurverstellungssystems (5) zu verhindern, wenn sich die Mulde (10) über einer Schwellenposition befindet, und um den Betrieb des Spurverstellungssystem (5) zu ermöglichen, wenn sich die Mulde unterhalb der Schwellenposition befindet.

4. Dumper (1) nach Anspruch 3, wobei der Dumper (1) konfiguriert ist, um den Betrieb des Spurverstellungssystems (5) zu verhindern, es sei denn, die Mulde (10) befindet sich in einer wenigstens im Wesentlichen vollständig abgesenkten Position und/oder in einer wenigstens im Wesentlichen vollständig ungekippten Position.

5. Dumper (1) nach einem der vorhergehenden Ansprüche, wobei der Dumper (1) konfiguriert ist, um den Betrieb des Spurverstellungssystems (5) zu verhindern, während die Mulde (10) relativ zu dem Hauptkörper (2) des Dumpers (1) bewegt wird, und um den Betrieb des Spurverstellungssystems (5) zu ermöglichen, während die Mulde (10) nicht relativ zu dem Hauptkörper (2) des Dumpers (1) bewegt wird.

6. Dumper (1) nach einem der vorhergehenden Ansprüche, wobei der Dumper (1) ein mechanisches Spurverstellungsunterbindungssystem (40) umfasst, das konfiguriert ist, um den Betrieb des Spurverstellungssystems (5) in Abhängigkeit von dem Auslösungszustand der Mulde (10) zu verhindern.

7. Dumper (1) nach einem der vorhergehenden Ansprüche, wobei der Dumper (1) ein gemeinsames Steuerelement umfasst, das durch einen Benutzer betriebsfähig ist, um sowohl den Auslösungszustand der Mulde (10) als auch die Spurbreite des Dumpers (1) zu steuern, wobei das Steuerelement entweder in einem Muldenauslösungsmodus zum Steuern des Auslösungszustands der Mulde (10) oder in einem Spurverstellungsmodus zum Steuern der Spurbreite des Dumpers (1) wahlweise betriebsfähig ist.

8. Dumper (1) nach einem der vorhergehenden Ansprüche, wobei der Dumper (1) ein gemeinsames Betätigungssystem (20) umfasst, das betriebsfähig ist, um sowohl den Auslösungszustand der Mulde (10) als auch die Spurbreite des Dumpers (1) zu steuern, wobei das Betätigungssystem (20) zwischen einem Muldenauslösungsmodus zum Steuern des Auslösungszustands der Mulde (10) und einem Spurverstellungsmodus zum Steuern der Spurbreite des Dumpers (1) wahlweise umschaltbar ist.

9. Dumper (1) nach Anspruch 8, wobei das gemeinsame Betätigungssystem (20) ein hydraulisches Betätigungssystem ist.

10. Dumper (1) nach Anspruch 9, wobei das gemeinsame Betätigungssystem (20) ein Ventil (22) umfasst, das betriebsfähig ist, um das gemeinsame Betätigungssystem (20) zwischen dem Muldenauslösungsmodus und dem Spurverstellungsmodus wahlweise umzuschalten.

11. Dumper (1) nach einem der vorhergehenden Ansprüche, wobei der Dumper (1) eine erste und eine zweite Achse (3, 4) umfasst, wobei das Spurverstellungssystem (5) konfiguriert ist, um die Spurweite des Dumpers (1) nur an einer ersten der ersten und der zweiten Achse (3, 4) zu variieren.

12. Dumper (1) nach einem der Ansprüche 1 bis 10, wobei der Dumper (1) eine erste und eine zweite Achse (3, 4) umfasst, wobei das Spurverstellungssystem (5) konfiguriert ist, um die Spurweite des Dumpers (1) an jeder der ersten und der zweiten Achse (3, 4) zu variieren.

13. Dumper (1) nach einem der vorhergehenden Ansprüche, wobei der Dumper (1) ein Benachrichtigungssystem umfasst, das konfiguriert ist, um einem Betreiber des Dumpers (1) zu bestätigen, ob die Spurverstellung gegenwärtig aktiviert oder gesperrt ist.

14. Dumper (1) nach einem der vorhergehenden Ansprüche, wobei der Dumper (1) ein Kompaktdumper ist, zum Beispiel ein Dumper (1), der eine Spurbreite von nicht mehr als 2 m und vorzugsweise nicht mehr als 1,5 m aufweist.

15. Dumper (1) nach einem der vorhergehenden Ansprüche, wobei der Dumper (1) ein mit Rädern versehener Dumper ist.

## Revendications

1. Tombereau (1) comprenant une benne (10) adaptée pour transporter une charge, un système de déploiement (11) qui peut être actionné pour lever et/ou basculer la benne (10) par rapport à un corps principal (2) du tombereau (1), et un système de réglage de la largeur de voie (5) qui peut être actionné pour faire varier la largeur de voie du tombereau (1) ;
dans lequel le tombereau (1) comprend un capteur (32) configuré pour détecter l'état de déploiement de la benne (10), et un système de commande électronique (30) qui est configuré pour bloquer le fonctionnement du système de réglage de la largeur de voie (5) en fonction de l'état de déploiement détecté de la benne (10).

2. Tombereau (1) selon la revendication 1, dans lequel le tombereau (1) est configuré pour bloquer le fonctionnement du système de réglage de la largeur de voie (5) en empêchant le système de réglage de la largeur de voie (5) d'être actionné pour réduire la largeur de voie du tombereau (1) et/ou en empêchant le système de réglage de la largeur de voie (5) d'être actionné pour augmenter la largeur de voie du tombereau (1) en fonction de l'état de déploiement de la benne (10).

3. Tombereau (1) selon la revendication 1 ou la revendication 2, dans lequel le tombereau (1) est configuré pour bloquer le fonctionnement du système de réglage de la largeur de voie (5) lorsque la benne (10) est au-delà d'une position de seuil, et pour permettre le fonctionnement du système de réglage de la largeur de voie (5) lorsque la benne est en dessous de la position de seuil.

4. Tombereau (1) selon la revendication 3, dans lequel le tombereau (1) est configuré pour bloquer le fonctionnement du système de réglage de la largeur de voie (5) à moins que la benne (10) ne soit dans une position au moins sensiblement complètement abaissée et/ou dans une position au moins sensiblement complètement non basculée.

5. Tombereau (1) selon l'une quelconque des revendications précédentes, dans lequel le tombereau (1) est configuré pour bloquer le fonctionnement du système de réglage de la largeur de voie (5) tandis que la benne (10) est déplacée par rapport au corps principal (2) du tombereau (1), et pour permettre le fonctionnement du système de réglage de la largeur de voie (5) tandis que la benne (10) n'est pas déplacée par rapport au corps principal (2) du tombereau (1).

6. Tombereau (1) selon l'une quelconque des revendications précédentes, dans lequel le tombereau (1) comprend un système mécanique de prévention de réglage de la largeur de voie (40) qui est configuré pour bloquer le fonctionnement du système de réglage de la largeur de voie (5) en fonction de l'état de déploiement de la benne (10).

7. Tombereau (1) selon l'une quelconque des revendications précédentes, dans lequel le tombereau (1) comprend un élément de commande commun qui peut être actionné par un utilisateur pour commander à la fois l'état de déploiement de la benne (10) et la largeur de voie du tombereau (1), dans lequel l'élément de commande peut être actionné de manière sélective soit dans un mode de déploiement de la benne pour commander l'état de déploiement de la benne (10), soit dans un mode de réglage de la largeur de voie pour commander la largeur de voie du tombereau (1).

8. Tombereau (1) selon l'une quelconque des revendications précédentes, dans lequel le tombereau (1) comprend un système d'actionnement commun (20) qui peut fonctionner pour commander à la fois l'état de déploiement de la benne (10) et la largeur de voie du tombereau (1), dans lequel le système d'actionnement (20) peut être commuté de manière sélective entre un mode de déploiement de la benne pour commander l'état de déploiement de la benne (10) et un mode de réglage de la largeur de voie pour commander la largeur de voie du tombereau (1).

9. Tombereau (1) selon la revendication 8, dans lequel le système d'actionnement commun (20) est un système d'actionnement hydraulique.

10. Tombereau (1) selon la revendication 9, dans lequel le système d'actionnement commun (20) comprend une soupape (22) qui peut être actionnée pour commuter de manière sélective le système d'actionnement commun (20) entre le mode de déploiement de la benne et le mode de réglage de la largeur de voie.

11. Tombereau (1) selon l'une quelconque des revendications précédentes, dans lequel le tombereau (1) comprend des premier et second essieux (3, 4), dans lequel le système de réglage de la largeur de voie (5) est configuré pour faire varier uniquement la largeur de voie du tombereau (1) au niveau d'un premier des premier et second essieux (3, 4).

12. Tombereau (1) selon l'une quelconque des revendications 1 à 10, dans lequel le tombereau (1) comprend des premier et second essieux (3, 4), dans lequel le système de réglage de la largeur de voie (5) est configuré pour faire varier la largeur de voie du tombereau (1) au niveau de chacun des premier et second essieux (3, 4).

13. Tombereau (1) selon l'une quelconque des revendications précédentes, dans lequel le tombereau (1) comprend un système de notification configuré pour confirmer à un opérateur du tombereau (1) si le réglage de la largeur de voie est actuellement activé ou bloqué.

14. Tombereau (1) selon l'une quelconque des revendications précédentes, dans lequel le tombereau (1) est un tombereau compact, par exemple un tombereau (1) ayant une largeur de voie de pas plus de 2 m et de préférence pas plus de 1,5 m.

15. Tombereau (1) selon l'une quelconque des revendications précédentes, dans lequel le tombereau (1) est un tombereau sur roues.
